(19) Europäisches Patentamt
European Patent Office
Office européen des brevets

(11) **EP 2 176 110 B1**

(12) **FASCICULE DE BREVET EUROPEEN**

(45) Date de publication et mention
de la délivrance du brevet:
**07.09.2011 Bulletin 2011/36**

(21) Numéro de dépôt: **08826968.3**

(22) Date de dépôt: **21.07.2008**

(51) Int Cl.:
**B60W 40/10** (2006.01)

(86) Numéro de dépôt international:
**PCT/FR2008/051370**

(87) Numéro de publication internationale:
**WO 2009/019391 (12.02.2009 Gazette 2009/07)**

(54) **PROCEDE D'ESTIMATION D'UNE VITESSE LONGITUDINALE D'UN VEHICULE, DISPOSITIF POUR SA MISE EN OEUVRE**

VERFAHREN ZUR SCHÄTZUNG DER LANGFRISTIGEN GESCHWINDIGKEIT EINES FAHRZEUGS UND VORRICHTUNG ZUR ANWENDUNG DIESES VERFAHRENS

METHOD FOR ESTIMATING THE LONGITUDINAL SPEED OF A VEHICLE AND DEVICE FOR IMPLEMENTING SAME

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.08.2007 FR 0705738**

(43) Date de publication de la demande:
**21.04.2010 Bulletin 2010/16**

(73) Titulaire: **Renault S.A.S.**
**92100 Boulogne-Billancourt (FR)**

(72) Inventeurs:
• **CLAEYS, Xavier**
  **F-75015 Paris (FR)**
• **MARSILIA, Marco**
  **F-92100 Boulogne Billancourt (FR)**

(56) Documents cités:
**US-A- 4 615 410    US-A1- 2006 282 207**

• **PUSCA R ET AL: "Fuzzy logic based control for electric vehicle with four separate traction drives" VTC SPRING 2002. IEEE 55TH. VEHICULAR TECHNOLOGY CONFERENCE. PROCEEDINGS. BIRMINGHAM, AL, MAY 6 - 9, 2002, IEEE VEHICULAR TECHNOLGY CONFERENCE, NEW YORK, NY : IEEE, US, vol. VOL. 1 OF 4. CONF. 55, 6 mai 2002 (2002-05-06), pages 2089-2096, XP010622184 ISBN: 0-7803-7484-3**

**Description**

L'invention concerne un procédé d'estimation d'une vitesse de déplacement longitudinal d'un véhicule automobile roulant.

Un domaine d'application de l'invention est les véhicules automobiles routiers sur roues, dans lesquels ce procédé est mis en oeuvre par un calculateur embarqué.

L'objectif est d'améliorer le comportement du véhicule et par conséquent la sécurité du conducteur.

Le véhicule est équipé de capteurs de vitesse de rotation des roues. Cette information est utilisée, entre autres, par des systèmes actifs de sécurité (ABS, contrôle de traction), ainsi que dans les stratégies d'anti-patinage.

Le procédé doit pouvoir être adapté à plusieurs types de véhicules routiers, comme par exemple les voitures à traction, les voitures à propulsion, les voitures 4x4 et les voitures hybrides.

La problématique d'estimation de la vitesse longitudinale d'un véhicule (vitesse de référence) a déjà été largement étudiée dans le monde automobile.

Le document US-A-5 579 230 propose un procédé d'estimation de la vitesse d'un véhicule, basé sur des capteurs de vitesse sur les roues non motrices, un accéléromètre et un capteur de freinage. Quand aucune action de freinage n'est indiquée par le capteur de freinage, la vitesse du véhicule est déterminée à partir des vitesses des roues, tandis que lorsqu'une action de freinage est indiquée par le capteur de freinage, la vitesse du véhicule est estimée par intégration de l'accélération de l'accéléromètre.

Le document PUSCA R ET AL: "Fuzzy logic based control for electric vehicle with four separate traction drives" VTC SPRING 2002. IEEE 55TH. VEHICULAR TECHNOLOGY CONFERENCE. PROCEEDINGS. BIRMINGHAM, AL, MAY 6 - 9, 2002, IEEE VEHICULAR TECHNOLGY CONFERENCE, NEW YORK, NY : IEEE, US, vol. VOL. 1 OF 4. CONF. 55, 6 mai 2002 (2002-05-06), pages 2089-2096, XP010622184 ISBN: 0-7803-7484-3 décrit d'obtenir la vitesse d'un véhicule à partir des vitesses de rotation des roues mesurées tenant compte du glissement de ces roues, voir notamment page 2092. Dans ce document, la vitesse de rotation de chaque roue reçoit un coefficient (k) qui se base sur le glissement. Il n'est pas divulgué de calculer la vitesse du véhicule seulement sur la base des roues dont le glissement est sous un certain seuil. US 2006/282207 A, alinéa 16, divulgue une considération des roues qui sont en contact avec le sol et ont un couple faible. Un glissement de ces roues n'est pas probable. De même, ce document ne divulgue pas de considérer le glissement de chaque roue.

L'invention vise à obtenir un procédé d'estimation de la vitesse longitudinale d'un véhicule automobile qui ne nécessite pas d'accéléromètre longitudinal et parvienne à estimer de manière optimale cette vitesse longitudinale à partir des vitesses de rotation des roues du véhicule.

A cet effet, un premier objet de l'invention est un procédé d'estimation d'une vitesse de déplacement longitudinal d'un véhicule automobile à l'aide d'au moins un calculateur embarqué sur le véhicule, comportant une étape de mesure, par au moins un capteur, de la vitesse de rotation de chaque roue du véhicule,

caractérisé en ce qu'il comporte en outre les étapes suivantes :

- obtention pour chaque roue d'un indicateur de glissement de roue, apte à prendre un premier état de glissement de la roue et un deuxième état d'absence de glissement de la roue,
- calcul de la vitesse de déplacement longitudinal du véhicule, à partir des vitesses de rotation de roues mesurées pour lesquelles l'indicateur de glissement de roue est dans le deuxième état d'absence de glissement de la roue, sans tenir compte des vitesses de rotation de roues mesurées pour lesquelles l'indicateur de glissement de roue est dans le premier état de glissement.

Suivant des caractéristiques de l'invention, on obtient une valeur de couple du ou des moteur(s) sur les roues avant et /ou arrière,

une pluralité de modes de calcul de la vitesse de déplacement longitudinal du véhicule est définie :

- un premier mode de calcul, lorsque, à la fois le couple sur les roues avant est inférieur à un premier seuil positif prescrit et supérieur à un deuxième seuil négatif prescrit, le couple sur les roues arrière est supérieur à un troisième seuil positif prescrit ou inférieur à un quatrième seuil négatif prescrit,
- un deuxième mode de calcul, lorsque à la fois le couple sur les roues arrière est inférieur à un cinquième seuil positif prescrit et supérieur à un sixième seuil négatif prescrit, le couple sur les roues avant est supérieur à un septième seuil positif prescrit ou inférieur à un huitième seuil négatif prescrit,
- un troisième mode de calcul, lorsque les conditions correspondant aux premier et deuxièmes modes de calcul ne sont pas remplies.

Suivant des caractéristiques de l'invention,

- dans le premier mode de calcul, la vitesse de déplacement longitudinal du véhicule est calculée :

  • à partir de la vitesse de rotation des roues avant, dont l'indicateur de glissement se trouvant dans le deuxième état d'absence de glissement, ou
  • si toutes les roues avant ont chacune leur indicateur de glissement se trouvant dans le premier état de glissement, à partir de la vitesse de rotation des roues arrière se trouvant dans le deuxième état d'absence de glissement,

- dans le deuxième mode de calcul, la vitesse de déplacement longitudinal du véhicule est calculée :

  • à partir de la vitesse de rotation des roues arrière, dont l'indicateur de glissement se trouvant dans le deuxième état d'absence de glissement, ou
  • si toutes les roues arrière ont chacune leur indicateur de glissement se trouvant dans le premier état de glissement, à partir de la vitesse de rotation des roues avant se trouvant dans le deuxième état d'absence de glissement,

- dans le troisième mode de calcul, la vitesse de déplacement longitudinal du véhicule est calculée à partir de la vitesse de rotation des roues arrière et des roues avant se trouvant dans le deuxième état d'absence de glissement.

Suivant d'autres caractéristiques de l'invention :

- on obtient à partir d'au moins un organe d'actionnement de freinage par le conducteur un premier signal d'indication de freinage, apte à se trouver dans un premier état de freinage ou dans un deuxième état d'absence de freinage, et

pour remplir les conditions des premier et deuxième modes de calcul le premier signal d'indication de freinage du conducteur doit en plus se trouver dans le deuxième état d'absence de freinage.

Suivant d'autres caractéristiques de l'invention :

on obtient à partir d'un système de régulation de freinage sur les roues avant et sur les roues arrière au moins un deuxième signal d'indication de freinage sur les roues avant, apte à se trouver dans un premier état de freinage ou dans un deuxième état d'absence de freinage, et au moins un troisième signal d'indication de freinage sur les roues arrière, apte à se trouver dans un premier état de freinage ou dans un deuxième état d'absence de freinage,

- pour remplir les conditions du premier mode de calcul, à la fois le couple sur les roues avant est inférieur à un premier seuil positif prescrit et supérieur à un deuxième seuil négatif prescrit, le deuxième signal d'indication de freinage sur les roues avant se trouve dans le deuxième état d'absence de freinage, le couple sur les roues arrière est supérieur à un troisième seuil positif prescrit ou inférieur à un quatrième seuil négatif prescrit, ou le troisième signal d'indication de freinage sur les roues arrière se trouve dans le premier état de freinage,
- pour remplir les conditions du deuxième mode de calcul, à la fois le couple sur les roues arrière est inférieur ou égal à un cinquième seuil positif prescrit et supérieur à un sixième seuil négatif prescrit, le troisième signal d'indication de freinage sur les roues arrière se trouve dans le deuxième état d'absence de freinage, le couple sur les roues avant est supérieur à un septième seuil positif prescrit ou inférieur à un huitième seuil négatif prescrit, ou le deuxième signal d'indication de freinage sur les roues avant se trouve dans le premier état de freinage.

Suivant d'autres caractéristiques de l'invention :

- Les seuils sont fixés de manière proportionnelle à une répartition de poids prédéterminée du véhicule sur au moins un essieu avant supportant les roues avant et sur au moins un essieu arrière supportant les roues arrière.
- On fait la moyenne arithmétique des vitesses de rotation de roue retenues dans les modes de calcul, multipliée par un rayon prescrit de roue, pour calculer la vitesse de déplacement longitudinal du véhicule.
- La vitesse de déplacement longitudinal du véhicule ayant été calculée, elle forme un premier signal de vitesse estimée,
  l'on détecte une discontinuité des valeurs du premier signal de vitesse estimée,
  on produit un deuxième signal de vitesse longitudinale du véhicule à partir du premier signal de vitesse estimée, en remplaçant la discontinuité détectée par un signal de transition continu prescrit.
- On calcule le deuxième signal de vitesse longitudinale du véhicule pour des instants successifs,
  on calcule une valeur de ladite discontinuité des valeurs du premier signal de vitesse estimée, cette valeur de la discontinuité étant égale à la différence entre la valeur du premier signal de vitesse estimée pour l'instant présent et la valeur du deuxième signal de vitesse longitudinale pour l'instant précédent,
le signal de transition étant déterminé en fonction de la valeur de la discontinuité à partir d'une forme prescrite de signal.

- On calcule une durée de transition du signal de transition, égale à la valeur de la discontinuité divisée par une pente prescrite.
- Le signal de transition est une rampe.
- Ladite discontinuité est détectée au moins par le fait que pour l'une des roues l'indicateur de glissement change d'état entre des instants successifs.
- Ladite discontinuité est détectée au moins par le fait que le mode de calcul change entre des instants successifs.

Un deuxième objet de l'invention est un dispositif pour la mise en oeuvre du procédé tel que décrit ci-dessus, destiné à être embarqué sur un véhicule automobile, caractérisé en ce qu'il comprend :

- au moins un capteur de la vitesse de rotation de chaque roue du véhicule,
- un moyen d'obtention pour chaque roue d'un indicateur de glissement de roue, apte à prendre un premier état de glissement de la roue et un deuxième état d'absence de glissement de la roue,
- un moyen de calcul de la vitesse de déplacement longitudinal du véhicule, à partir des vitesses de rotation de roues mesurées pour lesquelles l'indicateur de glissement de roue est dans le deuxième état d'absence de glissement de la roue, sans tenir compte des vitesses de rotation de roues mesurées pour lesquelles l'indicateur de glissement de roue est dans le premier état de glissement.

L'invention sera mieux comprise à la lecture de la description qui va suivre, donnée uniquement à titre d'exemple non limitatif en référence aux dessins annexés, sur lesquels :

- les figures 1 à 8 concernent un exemple de dispositif pour la mise en oeuvre d'un procédé d'estimation du glissement des roues d'un véhicule automobile, et en particulier :

  • la figure 1 représente un synoptique modulaire,
  • la figure 2 est une vue schématique de dessus d'un véhicule,
  • la figure 3 est un synoptique modulaire d'un dispositif pour calculer une dérivée de glissement,
  • les figures 4 et 5 représentent un mode de réalisation d'un moyen de génération d'un indicateur de glissement,
  • les figures 6 à 8 représentent un mode de réalisation d'un moyen de réhabilitation de l'indicateur de glissement,

- la figure 9 représente un synoptique modulaire d'un dispositif pour la mise en oeuvre du procédé d'estimation de vitesse longitudinale du véhicule,
- les figures 10 et 11 représentent des modes de réalisation de parties du dispositif suivant la figure 9,
- la figure 12 est chronogramme de signaux générés dans le dispositif suivant la figure 9.

L'invention est décrite ci-dessous pour un véhicule automobile roulant sur deux roues avant et deux roues arrière, les deux roues avant étant par exemple motrices, les deux roues arrière pouvant éventuellement également être motrices. Sur chaque roue est prévu un capteur 1 de vitesse de rotation, apte à fournir en sortie une mesure W de vitesse de rotation de la roue associée.
Dans ce qui suit, chacune des quatre roues du véhicule, ainsi que les grandeurs associées à cette roue R, sont désignées par un couple d'indice ij selon la convention suivante :

- 11 ou fl désigne la roue avant gauche,
- 12 ou fr désigne la roue avant droite,
- 21 ou rl désigne la roue arrière gauche,
- 22 ou rr désigne la roue arrière droite.

Le sens longitudinal s'entend dans le sens avant-arrière.
Le procédé suivant l'invention est mis en oeuvre dans un dispositif 40, comprenant par exemple un ou plusieurs calculateurs numériques pour effectuer les traitements et calculs.
Le dispositif comporte les entrées suivantes :

- les vitesses $W_{ij}$ de rotation des roues ij,
- le ou les couples moteurs ($C_{mi}$) sur le ou les essieux de traction du véhicule,
- le couple $C_{fij}$ de freinage sur chaque roue ij,

- le rapport Clf = CLf_status, Clr = CLr_status de boîte de vitesses,
- un signal SI d'indication de l'actionnement des freins ou de l'absence de l'actionnement des freins.

Le couple Cmi de traction et le rapport Clf, CLr de boîte de vitesses sont fournis par un calculateur moteur non représenté, ainsi que cela est connu de l'homme du métier.

Le couple Cfij de freinage est calculé à partir des pressions Tfij de freinage pour chaque roue, par un estimateur 3 par exemple du type ABS ou ESP.

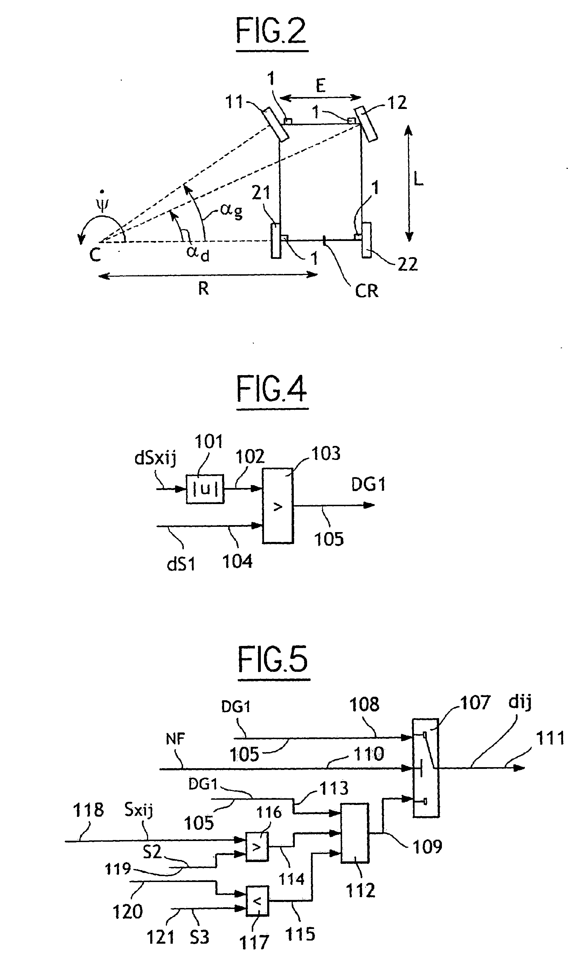

Un module 4 est prévu pour traiter les vitesses Wij de rotation des roues fournies par les capteurs 1, afin de corriger la différence de vitesse entre les roues dans les virages. Ce module 4 calcule pour chaque roue la vitesse ramenée au centre de l'essieu arrière constituant un centre CR de rotation pour des roues directrices situées à l'avant, ainsi que cela est représenté à la figure 2. Les vitesses de rotation ainsi traitées sont les suivantes :

$$\omega_{fl} = W_{fl} \frac{|R|}{\sqrt{\left(R + \dfrac{E}{2}\right)^2 + L^2}} \qquad \omega_{fr} = W_{fr} \frac{|R|}{\sqrt{\left(R - \dfrac{E}{2}\right)^2 + L^2}}.$$

$$\omega_{rl} = \left(W_{rl} + \psi \frac{E}{2r}\right) \qquad \omega_{rr} = \left(W_{rr} + \psi \frac{E}{2r}\right)$$

avec

$\omega_{ij}$ : Vitesse roue ij centrée
$\psi$ : Vitesse de lacet
$R$ : Rayon du virage
$L$ : Empattement du véhicule
$W_{ij}$ : Information vitesse roue issue du capteur
$E$ : Voie du véhicule
$r$ : Rayon roue

Le rayon R du virage est calculé à partir de la vitesse de lacet et de l'angle $\alpha$ de braquage des roues, c'est-à-dire $\alpha_d$ pour la roue avant droite et $\alpha_g$ pour la roue avant gauche. Cet angle $\alpha_d$, $\alpha_g$ de volant et la vitesse de lacet sont mesurés par des capteurs embarqués sur le véhicule.

Les vitesses $\omega_{ij}$ qui sont utilisées par la suite ont par exemple été filtrées par un filtre passe-bas.

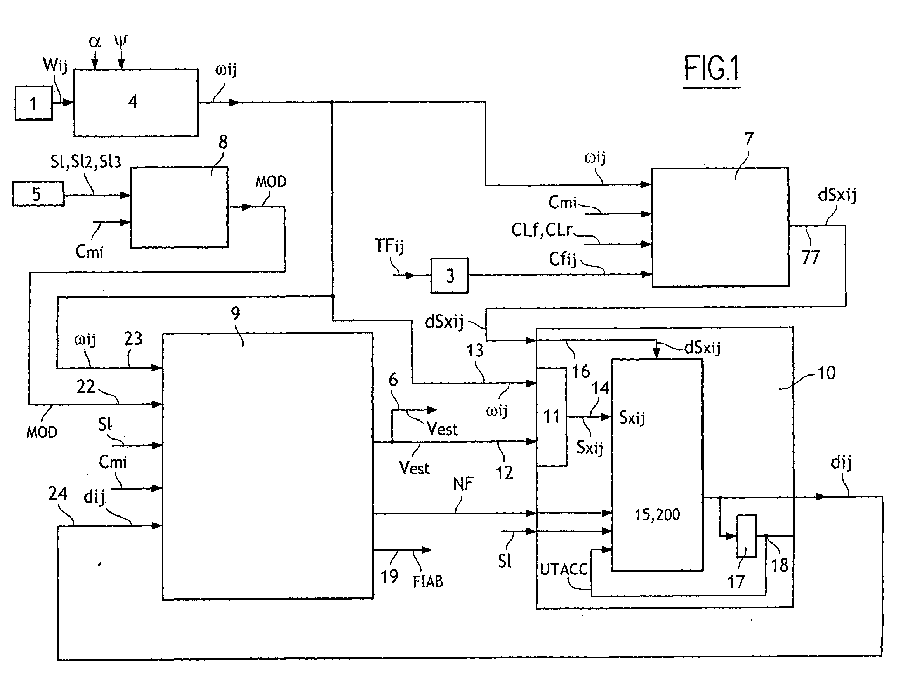

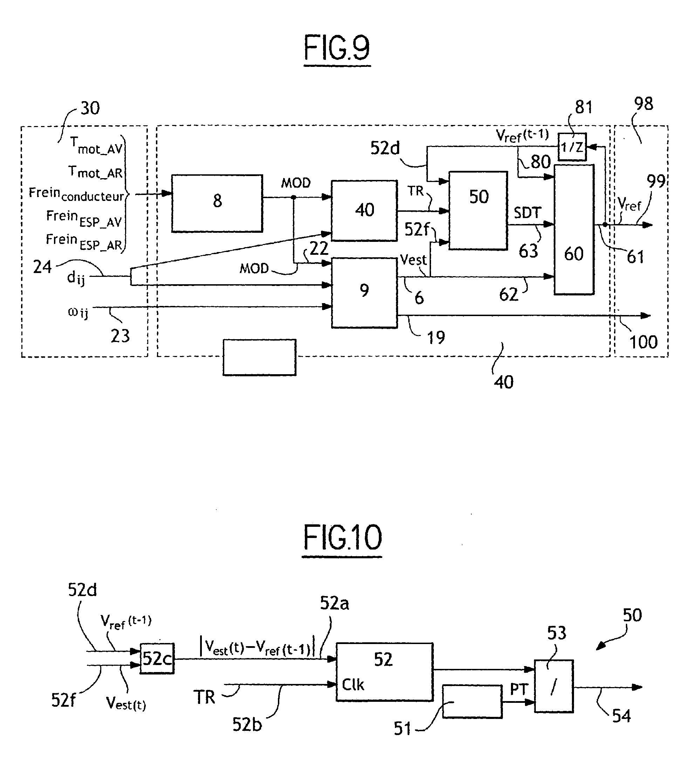

On décrit ci-dessous des moyens pour calculer un indicateur dij de glissement des roues, en référence aux figures 1 à 8. Toutefois, cet indicateur dij de glissement des roues peut être fourni par tout autre moyen. D'une manière générale, l'indicateur dij de glissement des roues apparaît en entrée 24 sur un module 30 d'entrée à la figure 9.

Un estimateur 7 est prévu pour calculer une dérivée dSxij du glissement de la roue ij à partir de la vitesse de rotation $\omega_{ij}$ de la roue, des couples moteurs $C_{mi}$, des couples de freinage Cfij (ou des pressions de freinage Tfij), du rapport de boîte de vitesses engagées CLf, CLr, qui forment des entrées reçues sur un bloc 71 d'entrée de l'estimateur 7.

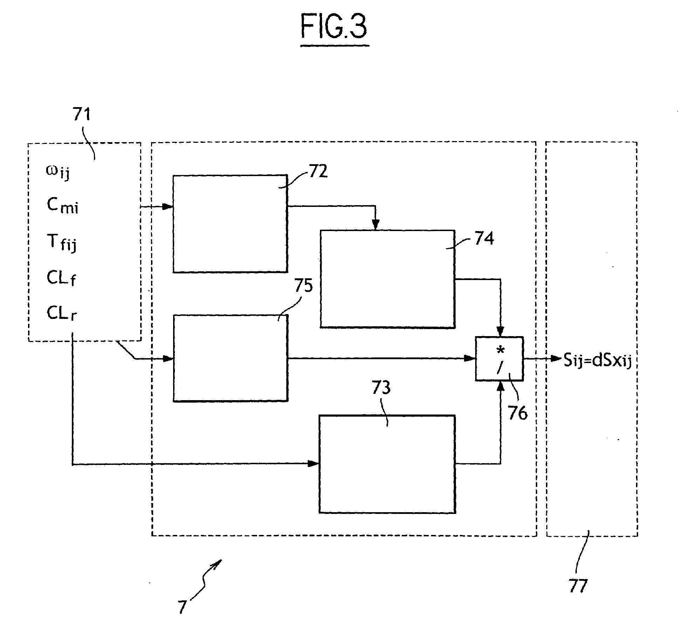

Un mode de réalisation de cet estimateur 7 est décrit ci-dessous en référence à la figure 3.

Le bloc 72 effectue une dérivation discrète et un filtrage de la vitesse de chaque roue et fournit une estimation de l'accélération de chaque roue.

Le bloc 73 effectue une estimation de la valeur du couple appliqué à chaque roue en tenant compte de la pression de freinage, du rapport de boîte de vitesses engagé et de l'état de l'embrayage.

Le bloc 75 effectue une estimation de l'inertie des roues pour chacun des essieux avant et arrière du véhicule.

Le bloc 74 qui est relié au bloc 72 effectue une transformation géométrique de l'estimation de l'accélération de chaque roue effectuée par le bloc 72.

Le bloc 76 effectue l'estimation de la dérivée du glissement de chaque roue, à partir des valeurs estimées par les blocs 74, 75 et 73.

On détaillera ci-après les calculs effectués par chacun des blocs ci-dessus.

On notera également Jij l'inertie équivalente à la roue, r le rayon de la roue, N le rapport de réduction globale, $Tm_j$ le couple moteur sur les essieux du véhicule (i=f, r pour représenter le couple moteur à l'essieu avant (front) ou arrière (rear) du véhicule), $P_{ij}$ les pressions de frein à la roue (i=f, r et j=d, g pour représenter une roue droite ou gauche du véhicule), $F_{ij}$ les efforts extérieurs appliqués à la roue, M la masse du véhicule, et V la vitesse du véhicule.

Dans le bloc 72, l'accélération de chaque roue est obtenue par dérivation discrète et filtrage de la vitesse de roue.

Dans le bloc 73, le couple moteur appliqué à chaque roue peut être obtenu à partir des informations issues des actionneurs ou par estimation.

Pour un actionneur électrique, le couple fourni est bien maîtrisé et peut être estimé grâce aux mesures de courant électrique et de régime moteur. Pour un moteur thermique, une estimation du couple moteur donne une information sur le couple fourni avec un degré de précision moyen mais suffisant.

Ensuite, le couple à chaque roue est calculé en prenant en considération le rapport de boîte ou l'état des embrayages (ou crabot) entre l'actionneur et les roues. Le différentiel est modélisé simplement mais il est envisageable d'améliorer le calcul du couple à la roue en utilisant un modèle de différentiel plus sophistiqué. '

Dans la suite $Cm_{ij}$ représente le couple moteur à la roue (i=f, r pour représenter le couple moteur à l'essieu avant ou arrière du véhicule, j=r, l pour représenter une roue droite ou gauche du véhicule), $Pf_{ij}$ les pressions de frein à la roue (i, j décrit précédemment) et $Cf_{ij}$ les couples de frein correspondant.

Une illustration de l'invention consiste à calculer le couple à la roue grâce à l'expression suivante (différentiel parfait).

Pour le couple aux roues avant droit et gauche :

$$Cm_{fr}=1/2 \ CLf\_status \ x \ Tm_f$$

$$Cm_{fl}=1/2 \ CLf\_status \ x \ Tm_f$$

$$Cf_{fr}=Efficacite\_Avant \ x \ P_{fr}$$

$$Cf_{fl}=Efficacite\_Avant \ x \ P_{fl}$$

Pour le couple aux roues arrières droite et gauche :

$$Cm_{rd}=1/2 \ CLr\_status \ x \ Tm_r$$

$$Cm_{rg}=1/2 \ CLr\_status \ x \ Tm_r$$

$$Cf_{rd}=Efficacite\_Arrière \ x \ P_{rr}$$

$$Cf_{rg}=Efficacite\_Arrière \ x \ P_{rl}$$

« Efficacité_Arrière et Efficacité-Avant » désignent les efficacités des freins (grandeur connue et identifiée par ailleurs) et Cli_status (i=f, r pour front, rear) le rapport engagé, cette valeur étant égale à 0, lorsque l'embrayage est ouvert.

Des variantes sont possibles pour améliorer l'estimation des couples moteurs et freins notamment pour :

- prendre en compte les variations de l'efficacité des freins à l'aide de techniques d'observations et
- mieux représenter le différentiel.

Le bloc 75 estime l'inertie des roues d'un même essieu, par exemple $J_{fi}$ pour l'essieu avant cette inertie est fonction de l'inertie moteur $J_{mot}$ et de l'inertie pont+roue $J_{pont}$ selon l'équation suivante :

$$J_{fi} = \frac{J_{pont} + CL_i \_ status^2 \cdot J_{mot}}{2}$$

avec CLi_status (f, r pour front, rear) le rapport engagé (0 si l'embrayage est ouvert).

Le bloc 74 effectue une transformation géométrique.

Dans le contexte d'un véhicule à 2 ou 4 roues motrices, les équations suivantes sont vérifiées pour chaque roue du véhicule :

$$J_{ij} \cdot \frac{\delta \omega_{ij}}{\delta t} = Cm_{ij} - Cf_{ij} - rF_{ij} \quad \text{avec} \quad i=f,l \quad j=l,r \qquad (1)$$

$$M \cdot \frac{\delta V}{\delta t} = \sum_{i,j} F_{ij} - C_x v^2 \qquad (2)$$

On supposera que la contribution de la force aérodynamique (- $C_x V^2$) est négligeable dans le calcul de la dynamique de glissement. De ce fait le terme aérodynamique disparaît dans la suite du calcul.

On appelle Sxij le glissement de la roue ij défini de la façon suivante :

$$Sx_{ij} = r.\omega_{ij} - V$$

En multipliant les deux termes de l'équation (2) par le rayon de la roue r et en sommant terme à terme l'équation ainsi obtenue avec l'équation (1), on obtient l'équation suivante :

$$r \cdot M \cdot \frac{\delta V}{\delta t} + \sum_{i,j} J_{ij} \cdot \frac{\delta \omega_{ij}}{\delta t} = \sum_{i,j} (Cm_{ij} - Cf_{ij}) \qquad (3)$$

En dérivant par rapport au temps t les deux termes de l'équation (3) on obtient :

$$\frac{\delta V}{\delta t} = r \frac{\delta \omega_{ij}}{\delta t} - \frac{\delta Sx_{ij}}{\delta t} \qquad (4)$$

On peut maintenant remplacer le terme $\frac{\delta V}{\delta t}$ de l'équation (4) avec l'expression au second terme de l'équation (5) pour tout couple d'indice ij. On obtient ainsi les quatre équations suivantes pour les quatre roues.

$$
\begin{cases}
(J_{11} + M \cdot r^2)\dfrac{\delta\omega_{11}}{\delta t} - \dfrac{\delta Sx_{11}}{\delta t} \cdot M \cdot r + \sum_{ij \neq 11} J_{ij} \cdot \dfrac{\delta\omega_{ij}}{\delta t} = \sum_{i,j}(Cm_{ij} - Cf_{ij}) \\[3mm]
(J_{12} + M \cdot r^2)\dfrac{\delta\omega_{12}}{\delta t} - \dfrac{\delta Sx_{12}}{\delta t} \cdot M \cdot r + \sum_{ij \neq 12} J_{ij} \cdot \dfrac{\delta\omega_{ij}}{\delta t} = \sum_{i,j}(Cm_{ij} - Cf_{ij}) \\[3mm]
(J_{21} + M \cdot r^2)\dfrac{\delta\omega_{21}}{\delta t} - \dfrac{\delta Sx_{21}}{\delta t} \cdot M \cdot r + \sum_{ij \neq 21} J_{ij} \cdot \dfrac{\delta\omega_{ij}}{\delta t} = \sum_{i,j}(Cm_{ij} - Cf_{ij}) \\[3mm]
(J_{22} + M \cdot r^2)\dfrac{\delta\omega_{22}}{\delta t} - \dfrac{\delta Sx_{22}}{\delta t} \cdot M \cdot r + \sum_{ij \neq 22} J_{ij} \cdot \dfrac{\delta\omega_{ij}}{\delta t} = \sum_{i,j}(Cm_{ij} - Cf_{ij})
\end{cases}
$$

L'estimation de la dérivée du glissement pour chacune des quatre roues est alors donnée par :

$$
\begin{cases}
\dfrac{\delta Sx_{11}}{\delta t} = \left[(J_{11} + M \cdot r^2)\dfrac{\delta\omega_{11}}{\delta t} + \sum_{ij \neq 11} J_{ij} \cdot \dfrac{\delta\omega_{ij}}{\delta t} - \sum_{i,j}(Cm_{ij} - Cf_{ij})\right]\dfrac{1}{M \cdot r} \\[3mm]
\dfrac{\delta Sx_{12}}{\delta t} = \left[(J_{12} + M \cdot r^2)\dfrac{\delta\omega_{12}}{\delta t} + \sum_{ij \neq 12} J_{ij} \cdot \dfrac{\delta\omega_{ij}}{\delta t} - \sum_{i,j}(Cm_{ij} - Cf_{ij})\right]\dfrac{1}{M \cdot r} \\[3mm]
\dfrac{\delta Sx_{21}}{\delta t} = \left[(J_{21} + M \cdot r^2)\dfrac{\delta\omega_{21}}{\delta t} + \sum_{ij \neq 21} J_{ij} \cdot \dfrac{\delta\omega_{ij}}{\delta t} - \sum_{i,j}(Cm_{ij} - Cf_{ij})\right]\dfrac{1}{M \cdot r} \\[3mm]
\dfrac{\delta Sx_{22}}{\delta t} = \left[(J_{22} + M \cdot r^2)\dfrac{\delta\omega_{22}}{\delta t} + \sum_{ij \neq 22} J_{ij} \cdot \dfrac{\delta\omega_{ij}}{\delta t} - \sum_{i,j}(Cm_{ij} - Cf_{ij})\right]\dfrac{1}{M \cdot r}
\end{cases}
$$

On note dans cette expression que le calcul de la dérivée du glissement est exact, différente pour une roue droite et une roue gauche et ne dépend plus des efforts extérieurs.

La sortie du système (bloc 77) est notée $\dfrac{\partial S_{x_{ij}}}{\partial t} = \dot{S}x_{ij} = \text{dSxij}$, ce qui représente l'estimation de la dérivée du glissement.

Les essais ont montré qu'il existait un écart très faible entre la valeur calculée de la dérivée du glissement et la valeur réelle de cette dérivée.

Ainsi, l'unité de calcul selon l'invention peut être utilisée pour contrôler de façon très précise notamment un dispositif d'anti-blocage des roues et/ou un dispositif d'anti-patinage des roues d'un véhicule automobile.

L'estimateur 7 met ainsi en oeuvre un procédé pour estimer la dérivée du glissement des roues d'un véhicule automobile équipé de deux ou quatre roues motrices et d'une unité de calcul pour mettre en oeuvre ce procédé, comprenant les étapes suivantes :

a) la saisie de données sur la vitesse des roues, des couples moteurs appliqués sur les roues, des pressions de freinage, du rapport de boîte de vitesses engagé,

b) l'estimation de l'accélération de chaque roue en effectuant une dérivation discrète et un filtrage de la vitesse de chaque roue,

c) l'estimation du couple appliqué à chaque roue en tenant compte, de la pression de freinage, du rapport de boîte de vitesses engagé et de l'état de l'embrayage,

d) l'estimation de l'inertie des roues pour chacun des essieux avant et arrière du véhicule,

e) la mise en oeuvre d'une transformation géométrique de l'estimation de l'accélération de chaque roue estimée en b),

f) l'estimation de la dérivée du glissement de chaque roue, à partir des valeurs estimées en c), d) et e).

Un module 8 est prévu pour déterminer un mode de calcul de la vitesse longitudinale du véhicule pour fournir sur une sortie un signal MOD d'indication de mode de calcul.

Ce module 8 comporte les entrées suivantes sur le module 30 d'entrée:

$C_{m1} = T_{mot\_AV}$ : Couple fourni par le moteur avant ($C_{mi}$ pour i = 1 à l'avant) ;
$C_{m2} = T_{mot\_AR}$ : Couple fournir par le moteur arrière ($C_{mi}$ pour i = 2 à l'arrière) ;
$SI = Frein_{conducteur}$ : ce signal est obtenu de la façon suivante :

1 si le conducteur appuie sur la pédale de frein
0 sinon ;

$SI2 = Frein_{ESP\_AV}$ : ce signal est obtenu de la façon suivante :

1 si au moins une roue avant est freinée par une régulation du type ABS/ASR/ESP
0 sinon ;

$SI3 = Frein_{ESP\_AR}$ : Ce signal est obtenu de la façon suivante :

1 si au moins une roue arrière est freinée par une régulation du type ABS/ASR/ESP
0 sinon.

Un module 5 représente globalement l'entité fournissant SI, SI1, SI2.

Le moteur avant est le moteur entraînant les roues avant. Dans le cas où les roues arrière sont entraînées par un moteur et où les roues avant ne sont pas entraînées, $Tmot\_AV = 0$.

Le moteur arrière est le moteur entraînant les roues arrière. Dans le cas où les roues avant sont entraînées par un moteur et où les roues arrière ne sont pas entraînées, $T_{mot\_AR} = 0$.

Dans le cas où à la fois les roues avant et les roues arrière sont entraînées par un même moteur ou par deux moteurs différents, $T_{mot\_AV}$ et $T_{mot\_AR}$ sont pris en compte, comme par exemple dans le cas d'un véhicule 4x4.

Dans un mode de réalisation, le signal MOD de mode de calcul de la vitesse longitudinale prend l'un parmi trois états 1, 2, 3, de la manière suivante :

MOD = 2 Si

$$\begin{bmatrix} |T_{mot-AV}| \langle Seuil_{mot-AV} & ET & Frein_{conducteur} = 0 & ET & Frein_{ESP-AV} = 0 & ET \\ (|T_{mot-AR}| \rangle Seuil_{mot-AR} & OU & Frein_{ESP-AR} = 1) & & & \end{bmatrix}$$

MOD = 3 SI

$$\begin{bmatrix} |T_{mot-AR}| \langle Seuil_{mot-AR} & ET & Frein_{conducteur} = 0 & ET & Frein_{ESP-AR} = 0 & ET \\ (|T_{mot-AV}| \rangle Seuil_{mot-AV} & OU & Frein_{ESP-AV} = 1) & & & \end{bmatrix}$$

MOD = 1 SINON.

$Seuil_{mot\_AV}$ et $Seuil_{mot\_AR}$ représentent des valeurs seuils sur les couples moteurs avant et arrière. Ils peuvent être choisis de la façon suivante :

- on se fixe une valeur d'adhérence $\mu_{min}$,
- on suppose que le poids du véhicule $F_{z\_tot}$ est réparti de façon fixe sur les essieux avant et arrière :

$$\begin{cases} F_{z\_AV} = x.F_{z\_tot} \\ F_{z\_AR} = (1-x).F_{z\_tot} \end{cases} \qquad \text{avec} \qquad 0 \langle x \langle 1$$

On peut poser par exemple $x = \dfrac{2}{3}$.

Les seuils $Seuil_{mot\_AV}$ et $Seuil_{mot\_AR}$ sont alors fixés de la façon suivante :

$$\begin{cases} Seuil_{mot\_AV} = \mu_{min}.F_{z\_AV}.r \\ Seuil_{mot\_AR} = \mu_{min}.F_{z\_AR}.r \end{cases}$$

Les seuils $Seuil_{mot\_AV}$ et $Seuil_{mot\_AR}$ ainsi choisis représentent donc les couples moteurs minima (avant ou arrière) pour un coefficient d'adhérence $\mu_{min}$.

Avec cette méthode, le choix des seuils $Seuil_{mot\_AV}$ et $Seuil_{mot\_AR}$ revient à choisir la valeur de $\mu_{min}$. Pour une adhérence supérieure ou égale à $\mu_{min}$, un couple moteur (avant ou arrière) inférieur à $Seuil_{mot\_AV}$ ou $seuil_{mot\_AV}$ est insuffisant pour faire glisser les roues.

Chaque seuil sur les modules ou valeurs absolues peut comprendre un seuil positif pour les valeurs positives et un seuil négatif pour les valeurs négatives.

Un estimateur 9 calcule une vitesse longitudinale estimée V=Vest du véhicule. La vitesse Vest est générée sur une sortie 6 de l'estimateur 9. A la figure 1, la vitesse Vest est en outre envoyée à une entrée 12 d'un estimateur 10.

Le principe de base de calcul de la vitesse de référence Vest est d'utiliser l'information des vitesses des roues qui ne glissent pas.

Cet estimateur 9 comporte les entrées suivantes :

- une entrée 22 pour le signal MOD de mode de calcul issu du module 8,
- des entrées 23 pour les vitesses de rotation $\omega_{ij}$ des roues sur le module 30 d'entrée,
- pour les différentes roues ij, des entrées 24 pour l'indicateur dij de glissement de la roue ij, qui prend un premier état dij = 1 de glissement si la roue est glissante, par exemple dans le cas d'un patinage ou d'un blocage, ou un deuxième état dij = 0 d'absence de glissement de la roue ij si l'état de la roue est normal, c'est-à-dire si sa vitesse est cohérente avec la vitesse du véhicule,

Le signal Vest est obtenu de la façon suivante :

- Si MOD = 1 alors

$$V_{est}(t) = \begin{cases} r \cdot \dfrac{\sum\limits_{i,j} \omega_{ij} \cdot (1-d_{ij})}{\sum\limits_{i,j}(1-d_{ij})} & si \quad \sum\limits_{i,j}(1-d_{ij}) \neq 0 \\ V_{est}(t-1) \end{cases}$$

- SI MOD = 2 alors

$$V_{est}(t) = \begin{cases} r \cdot \dfrac{\sum\limits_{j} \omega_{1j} \cdot (1-d_{1j})}{\sum\limits_{j} (1-d_{1j})} & si \quad \sum\limits_{j} (1-d_{1j}) \neq 0 \\[3em] r \cdot \dfrac{\sum\limits_{j} \omega_{2j} \cdot (1-d_{2j})}{\sum\limits_{j} (1-d_{2j})} & si \quad \left( \sum\limits_{j} (1-d_{1j}) = 0 \quad ET \quad \sum\limits_{j} (1-d_{2j}) \neq 0 \right) \\[3em] V_{est}(t-1) & sinon \end{cases} .$$

Si MOD = 3 alors

$$V_{est}(t) = \begin{cases} r \cdot \dfrac{\sum\limits_{j} \omega_{2j} \cdot (1-d_{2j})}{\sum\limits_{j} (1-d_{2j})} & si \quad \sum\limits_{j} (1-d_{2j}) \neq 0 \\[3em] r \cdot \dfrac{\sum\limits_{j} \omega_{1j} \cdot (1-d_{1j})}{\sum\limits_{j} (1-d_{1j})} & si \quad \left( \sum\limits_{j} (1-d_{2j}) = 0 \quad ET \quad \sum\limits_{j} (1-d_{1j}) \neq 0 \right) \\[3em] V_{est}(t-1) & sinon \end{cases}$$

Les considérations qui sont à la base de cette estimation sont les suivantes :

1. Les roues soumises à un faible couple (le signal MOD contient cette information) sont les mieux adaptées à estimer la vitesse longitudinale du véhicule. On appelle ici "faible couple" un couple insuffisant à faire glisser les roues si l'adhérence est supérieure à la valeur $\mu_{min}$ choisie. Si par exemple le couple à l'essieu arrière du véhicule est nul (véhicule en mode traction avant) et que le conducteur du véhicule ne freine pas et qu'il n'y a pas d'intervention des systèmes actifs de sécurité alors MOD = 3 et on utilisera de préférence les vitesses des roues arrière pour estimer la vitesse de référence.

2. Les roues caractérisées par un $d_{ij}$ = 1 (roues estimées glissantes) ne doivent pas être utilisés pour l'estimation ;

3. Une moyenne arithmétique des vitesses des roues préconisées au point 1, et autorisées au point 2. fournit la meilleure estimation de la vitesse longitudinale du véhicule :

4. Si les 4 roues glissent, on ne peut pas estimer la vitesse longitudinale du véhicule avec l'information de vitesse roues $\omega_{ij}$. On choisit alors de geler la valeur de cette estimation.

Le fait que toutes les roues glissent est détecté par le fait qu'un signal UTACC est dans un premier état.

Un moyen est également prévu, par exemple dans l'estimateur 9, pour fournir sur une sortie 19 un signal FIAB d'indication de fiabilité de la valeur $V_{est}$ de vitesse longitudinale et du glissement $S_{xij}$ des roues.

Dans un mode de réalisation, ce signal FIAB est binaire et obtenu de la façon suivante :

$$FIAB(t) = \begin{cases} 1 & si & \sum_{i,j}(1-d_{ij}) \neq 0 \\ 0 & sinon \end{cases}$$

le signal fiabilité ne peut prendre alors que deux valeurs :

. 0 : $V_{est.}$ n'est pas fiable, donc les quatre roues sont considérées glissantes (dij = 1 pour toutes les roues),
· 1 : $V_{est.}$ est fiable, donc au moins une roue ne glisse pas.

Un autre mode de réalisation est le suivant :

$$FIAB(t) = \begin{cases} 0 & si & \sum_{i,j}(1-d_{ij}) = 0 \\ 2 & si & \begin{pmatrix} \sum_{i,j}(1-d_{ij}) = 4 & OU & (MOD=2 & ET & \sum_{j}(1-d_{ij}) = 2) \\ OU \, (MOD=3 & ET & \sum_{j}(1-d_{2j}) = 2) \end{pmatrix} \\ 1 & sinon \end{cases}$$

Le signal fiabilité peut prendre alors trois valeurs :

. 0 : $V_{est.}$ n'est pas fiable, donc les quatre roues sont considérées glissantes ($d_{ij} = 1 \; \forall ij$).
. 2 : $V_{est.}$ est "très" fiable, donc les quatre roues ne glissent pas ou les deux roues d'un même essieu sont soumises à un faible couple et ne glissent pas.
. 1 : $V_{est.}$ est "assez" fiable.

Dans un mode de réalisation, il est prévu, par exemple dans l'estimateur 9, un moyen pour calculer un signal NF d'indication de non fiabilité des glissements $S_{xij}$ des roues en fonction des indicateurs dij de glissement des roues ij de la manière suivante :

NF = 1 (1 étant un état d'absence de fiabilité) si pour toutes les roues, dij = 1, correspondant au fait que toutes les roues glissent,
NF = 0 sinon, correspondant à un deuxième état de présence de fiabilité.

Le signal NF prend l'état 1 d'absence de fiabilité lorsque l'on ne veut pas prendre en compte le signal Sxij pour détecter le glissement d'une roue.
Un estimateur 10 est prévu pour calculer les indicateurs dij de glissement des roues ij. L'estimateur 10 comporte les entrées suivantes :

- la dérivée dSxij de glissement des roues ij,
- la vitesse longitudinale estimée $V_{est}$, également appelée vitesse de référence Vest,
- le signal NF d'absence de fiabilité.

Un moyen 11 est prévu, par exemple dans l'estimateur 10, pour calculer le glissement absolu $S_{xij}$ de la roue ij suivant la formule :

$$S_{xij} = V_{roue \; ij} - Vest$$

avec

$$V_{roue\ ij} = r.\ \omega_{ij}\ ,$$

Vest et $\omega_{ij}$ étant en entrées 12, 13 du module 11, Sxij étant en sortie 14 du moyen 11.

$V_{roue}$ ij représente la vitesse linéaire de la roue ij.

Dans le module 10, la dérivée $dS_{xij}$ de glissement est éventuellement filtrée dans un filtre passe-bande. Le signal issu de ce filtrage passe-bande étant ensuite utilisé.

Dans le cas où le signal NF est dans l'état NF = 0 de présence de fiabilité, l'indicateur dij de glissement de roue est mis dans le premier état dij=1 de glissement lorsque les conditions suivantes sont remplies :

$$\text{si}\ \left( \left( |dSxij| \rangle dS1 \right)\ \ OU\ \ \left( Sxij \rangle S2 \right)\ \ OU\ \ \left( Sxij \langle S3 \right) \right)\ alors\ dij = 1.$$

Dans le cas où le signal NF se trouve dans l'état NF = 1 d'absence de fiabilité, l'indicateur dij de glissement est mis dans l'état de glissement dij = 1, lorsque les conditions suivantes sont remplies :

$$\text{si}\ \left( |dSxij| \rangle dS4 \right)\ alors\ dij = 1.$$

dS1 est un seuil positif de détection de glissement pour dSx (un premier seuil positif pour les valeurs positives de dSxij et un deuxième seuil négatif pour les valeurs négatives de dSxij pourrait également être prévu),

S2 est un troisième seuil positif de glissement,

S3 est un quatrième seuil négatif de glissement,

dS4 est un seuil positif de dérivée de glissement (un premier seuil positif pour les valeurs positives de dSxij et un deuxième seuil négatif pour les valeurs négatives de dSxij pourrait également être prévu).

Les seuils dS1, S2, S3, dS4 sont prescrits à des valeurs constantes dans le module 10.

On décrit ci-dessous en référence aux figures 4 et 5 un mode de réalisation d'un moyen 15 de génération de l'indicateur dij de glissement, comportant une entrée 14 pour Sxij et une entrée 16 pour dSxij.

La dérivé dSxij de glissement est envoyée à l'entrée d'un moyen 101 de formation du module, dont la sortie est reliée à une première entrée 102 d'un comparateur 103, dont la deuxième entrée 104 est reliée au premier seuil dS1. Le comparateur 103 fournit sur sa sortie 105 un signal DG1 de détection de glissement prenant le premier état 1 de glissement dans le cas où le module de dSxij est supérieur à dS1 et le deuxième état 0 d'absence de glissement sinon.

Dans ce mode de réalisation, dS1 = dS4.

Un moyen 107 de commutation est prévu, comportant une entrée 110 de commande de commutation reliée au signal NF, pour commuter la sortie 111 de fourniture d'indicateur dij, soit sur une première entrée 108 reliée à la sortie 105 lorsque le signal NF est égal à 1, soit sur une deuxième entrée 109 lorsque le signal NF est égal à 0. L'entrée 109 est reliée à la sortie d'un opérateur logique OU 112, comportant une première entrée 113 reliée à la sortie 105, une deuxième entrée 114 reliée à la sortie d'un comparateur 116 et une troisième entrée 115 reliée à la sortie d'un comparateur 117.

Le comparateur 116 comporte une première entrée 118 reliée au signal Sxij de glissement et une deuxième entrée 119 reliée au seuil S2, pour fournir sur sa sortie 114 un état 1 de glissement lorsque le signal sur sa première entrée 118 est supérieur au signal sur sa deuxième entrée 119, et un état 0 d'absence de glissement sinon.

Le comparateur 117 comporte une première entrée 120 reliée au signal Sxij de glissement et une deuxième entrée 121 reliée au seuil S3, pour fournir sur sa sortie 115 un état 1 de glissement lorsque le signal sur sa première entrée 120 est supérieure au signal sur sa deuxième entrée 121, et un état 0 d'absence de glissement sinon.

Pour la réhabilitation d'une roue, on utilise les signaux Sxij et dSxij utilisés pour la détection de glissement. La grandeur dSxij est par exemple filtrée dans un filtre passe-bas. On définit en entrée le signal logique SI de freinage du conducteur, qui prend la valeur 1 de freinage lorsqu'on est en situation de freinage et prend la valeur 0 sinon.

On décrit ci-dessous des moyens de réhabilitation d'une roue pour faire passer l'indicateur dij de l'état 1 de glissement à l'état 0 d'absence de glissement lorsque certaines conditions sont respectées. On définit à partir des indicateurs dij dans leur état actuel un signal UTACC pour le calcul de l'état suivant des indicateurs dij. Ce signal UTACC est par exemple calculé par un module 17, par exemple de l'estimateur 10, comportant en entrées les indicateurs dij des roues, issus du module 15, et en sortie 18 le signal UTACC.

Lorsque pour toutes les roues, les indicateurs dij sont dans l'état 1 de glissement, le signal UTACC prend la valeur 1, ou sinon prend la valeur 0.

Dans le cas où le signal UTACC est dans l'état 0, l'indicateur dij est réhabilité dans l'état 0 d'absence de glissement de la manière suivante.

$$\text{Si } \left( (Sl = 1)\, et \left( \left( |Sxij| \langle S11 \right) \quad pendant\ T11 \right) \right)$$

alors dij=0.
Si

$$\left( (Sl = 0)\, et \left( \left( |dSxij| \langle dS12 \right) \quad pendant\ T121 \right) \right.$$

et

$$\left( \left( |Sxij| \langle S13 \right) \quad \text{à l'instant de fin de}\ T121 \right)$$

alors dij=0.
Dans le cas où le signal UTACC est dans l'état 1, l'indicateur dij est réhabilité dans l'état 0 d'absence de glissement de la manière suivante :

$$\text{Si } \left( (Sl = 1)\, et \left( \left( |dSxij| \langle dS12 \right) \quad pendant\ T122 \right) \right) \quad alors\ dij = 0.$$

$$\text{Si } \left( (Sl = 0)\, et \left( \left( |dSxij| \langle dS12 \right) \quad pendant\ T121 \right) \right) \quad alors\ dij = 0.$$

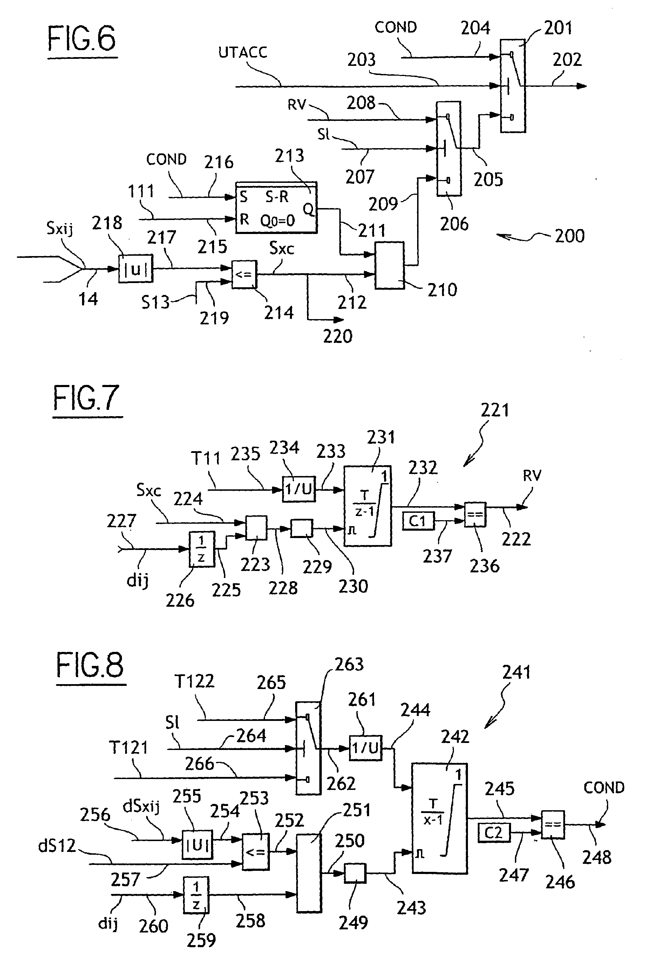

dS12 est un seuil positif prescrit de réhabilitation pour la dérivée de glissement,
**[0107]** T121 est une durée prescrite pendant laquelle la valeur absolue du signal dSxj doit se trouver en dessous du seuil dS12. Cette temporisation peut être différente dans le cas d'un glissement négatif ou positif. Dans le cas d'un freinage, correspondant à un glissement négatif, une durée prescrite différente T122 est définie.
S11 est un seuil positif prescrit de réhabilitation pour le glissement, dans le cas d'un freinage du conducteur,
T11 est une durée prescrite pendant laquelle la valeur absolue du signal Sxij doit se trouver en-dessous du seuil S11,
S13 est un seuil positif prescrit de réhabilitation pour le glissement Sx, dans le cas où il n'y a pas de freinage du conducteur.
Comme précédemment, chaque seuil sur les modules ou valeurs absolues peut comprendre un seuil positif pour les valeurs positives et un seuil négatif pour les valeurs négatives.
On décrit ci-dessous en référence aux figures 6 à 8 un mode de réalisation d'un moyen 200 de réhabilitation de l'indicateur dij dans l'état 0 d'absence de glissement.
Le moyen 200 de réhabilitation comporte un commutateur 201 comportant une sortie 202 de fourniture de l'indicateur dij = 0 de fin de glissement, et une entrée 203 de commande de commutation reliée au signal UTACC pour commuter la sortie 202, soit sur une première entrée 204 dans le cas où UTACC = 1, soit sur une deuxième entrée 205 dans le cas où UTACC = 0. L'entrée 205 est reliée à la sortie d'un commutateur 206 comportant une entrée 207 de commande de commutation reliée au signal SI de freinage pour commuter l'entrée 205, soit sur une première entrée 208 du commutateur 206 dans le cas où le signal SL est à 1 en présence d'un freinage du conducteur, soit sur une deuxième entrée 209 du commutateur 206 dans le cas où le signal SL est à 0 en l'absence de freinage du conducteur. L'entrée 208 est reliée à un signal RV de réhabilitation sur la vitesse. L'entrée 209 est reliée à la sortie d'un opérateur logique ET 210, comportant une première entrée 211 reliée à la sortie Q d'état d'une bascule 213 de type RS et une deuxième entrée 212 reliée à la sortie d'un comparateur 214. La bascule 213 est à l'état initial Q0=0 et comporte une entrée 215 de réinitialisation reliée à la sortie 111 de détection de glissement et une entrée S 216 de réglage. Le comparateur 214 comporte une première entrée 217 reliée à la sortie d'un opérateur 218 formant la valeur absolue du signal Sxij de glissement appliqué sur son entrée 14 et une deuxième entrée 219 reliée au seuil S13. Les entrées 204 et 216 sont reliées à un signal COND de condition de réhabilitation sur dSxij. La sortie du comparateur 214 fournit sur l'entrée 212 ainsi que sur une dérivation 220 de celle-ci un signal Sxc d'indication de correction, qui est égal à 1 lorsque la valeur sur l'entrée 217 est inférieure ou égale à la valeur sur l'entrée 219, et qui est égal à 0 sinon.

A la figure 7 est représenté un moyen 221 de production, sur une sortie 222, du signal RV de réhabilitation sur la vitesse. Ce moyen 221 comporte un opérateur ET logique 223 comportant une première entrée 224 reliée au signal Sxc et une deuxième entrée 225 reliée à la sortie d'une unité 226 de retard recevant sur son entrée 227 l'indicateur dij. La sortie 228 de l'opérateur logique ET 223 est reliée à l'entrée d'un opérateur NON logique 229 dont la sortie est reliée à une première entrée 230 de remise à zéro d'un intégrateur 231 en temps discret, afin de remettre à zéro la valeur présente sur la sortie 232 de celui-ci lorsque l'entrée 230 est à 1. L'intégrateur 231 comporte une deuxième entrée 233 de signal à intégrer, reliée à la sortie d'un opérateur 234 inverseur de la valeur présente sur son entrée 235, elle-même reliée à la durée T11, afin de fournir au bout de cette durée T11 un signal égal à 1 sur la sortie 232 depuis que la valeur présente sur la première entrée 230 est égale à 0. La sortie 232 est reliée à une première entrée d'un opérateur logique 236 d'égalité recevant sur une deuxième entrée 237 une valeur constante C1, égale à 1 dans l'exemple précédent, pour fournir sur la sortie 222 le signal RV de réhabilitation sur la vitesse, qui est égal à 1 en cas d'égalité entre la valeur présente sur la première entrée 232 et la valeur C1 présente sur la deuxième entrée 237, et une valeur 0 sinon.

A la figure 8 est représenté un moyen 241 de production du signal COND de condition de réhabilitation sur la dérivée du glissement. Il comporte un intégrateur 242 du même type que l'intégrateur 231 décrit en référence à la figure 7, dont la première entrée de remise à zéro est désignée par 243, la deuxième entrée de signal à intégrer par 244, la sortie par 245, elle-même reliée à la première entrée d'un opérateur logique 246 d'égalité du même type que l'opérateur 236 et ayant sur sa deuxième entrée 247 une constante C2 par exemple égale à 1, cet opérateur 246 fournissant sur sa sortie 248 le signal COND. La première entrée 243 est reliée à la sortie d'un opérateur logique NON 249, dont l'entrée 250 est reliée à la sortie d'un opérateur logique ET 251. L'opérateur ET 251 comporte une première entrée 252 reliée à la sortie d'un comparateur 253, qui comporte une première entrée 254 reliée par un opérateur 255 de formation de la valeur absolue à une entrée 256 reliée au signal dSxij de dérivée de glissement, et une deuxième entrée 257 reliée au seuil dS12. L'opérateur ET 251 comporte également une deuxième entrée 258 reliée à la sortie d'une unité 259 de retard, dont l'entrée 260 est reliée à l'indicateur dij. La deuxième entrée 244 de signal à intégrer de l'intégrateur 242 est reliée à la sortie d'un opérateur 261 de formation de la valeur inverse dont l'entrée 262 est reliée à la sortie d'un commutateur 263. Le commutateur 263 comporte une entrée 264 de commande de commutation, reliée au signal Si de freinage, pour commuter la sortie 262, soit sur une première entrée 265 reliée à la durée T122 en cas de freinage du conducteur lorsque le signal SI est égal à 1, soit sur une deuxième entrée 266 reliée à la durée T121 en absence de freinage du conducteur lorsque le signal SI est égal à 0.

Le signal Vest est discontinu.

A la figure 9, un module 40 est prévu pour fournir, en fonction des entrées MOD et dij, un signal TR de transition en sortie, obtenu de la façon suivante :

si ((dij(t) ≠ dij(t-1)) OU (MOD(t) ≠MOD(t-1)), alors TR = 1 : premier état d'indication de discontinuité,

sinon, TR = 0 : deuxième état d'absence d'indication de discontinuité,

t désignant le dernier instant de calcul, t-1 désignant l'avant dernier instant de calcul.

Le passage au premier état 1 du signal TR indique l'instant où se produit une discontinuité de la vitesse longitudinale estimée Vest.

Un module 50 est prévu pour fournir en sortie un signal SDT de durée de transition.

Le module 50 comporte en entrées :

- le signal TR de transition,
- la vitesse longitudinale estimée Vest.

A partir du signal Vest, on estime la vitesse de référence du véhicule par un signal Vref continu. Le signal Vref est un deuxième signal Vref de vitesse longitudinale continu. La vitesse Vest de déplacement longitudinal du véhicule, ayant été calculée ci-dessus, forme un premier signal de vitesse estimée. Le module 50 calcule la durée SDT des transitions à partir du paramètre de réglage constitué par une pente PT transitoire dans le module 51, ainsi que cela est représenté dans le mode de réalisation de la figure 10.

Une bascule 52 mémorise la valeur absolue de la différence entre la valeur actuelle de la vitesse estimée Vest (t) et la vitesse de référence Vref(t-1) de l'instant précédent, soit |Vest(t)-Vref(t-1)| appliquée sur son entrée 52a, et ce au dernier instant où le signal TR de transition est à l'état 1 d'indication de discontinuité, le signal TR étant appliqué sur son entrée 52b d'horloge. Un module 52c est prévu pour fournir, à partir de Vref(t-1) sur son entrée 52d, par exemple reliée à l'entrée 80, et de Vest(t) sur son entrée 52f, la valeur |Vest(t)-Vref(t-1)| 1 sur la sortie du module 52c reliée à l'entrée 52a. Cette valeur est divisée par le paramètre de pente PT transitoire dans un diviseur 53, pour fournir sur une sortie 54 la durée SDT de la transition, selon l'équation :

$$PT = |Vest(t)-Vref(t-1)| / SDT$$

La durée SDT des transitions est déterminée de manière variable avec la discontinuité |Vest(t)-Vref(t-1)|. Cette durée SDT est choisie comme le temps nécessaire pour passer de la valeur Vref(t-1) à la valeur Vest(t) avec une accélération constante égale à la pente transitoire PT. Un choix possible est de fixer le paramètre de pente transitoire PT à la valeur d'accélération maximale du véhicule.

Un module 60 est prévu pour produire sur une sortie 61 le signal de vitesse de référence Vref à partir de la vitesse estimée Vest et de la durée SDT de transition en entrées 62, 63.

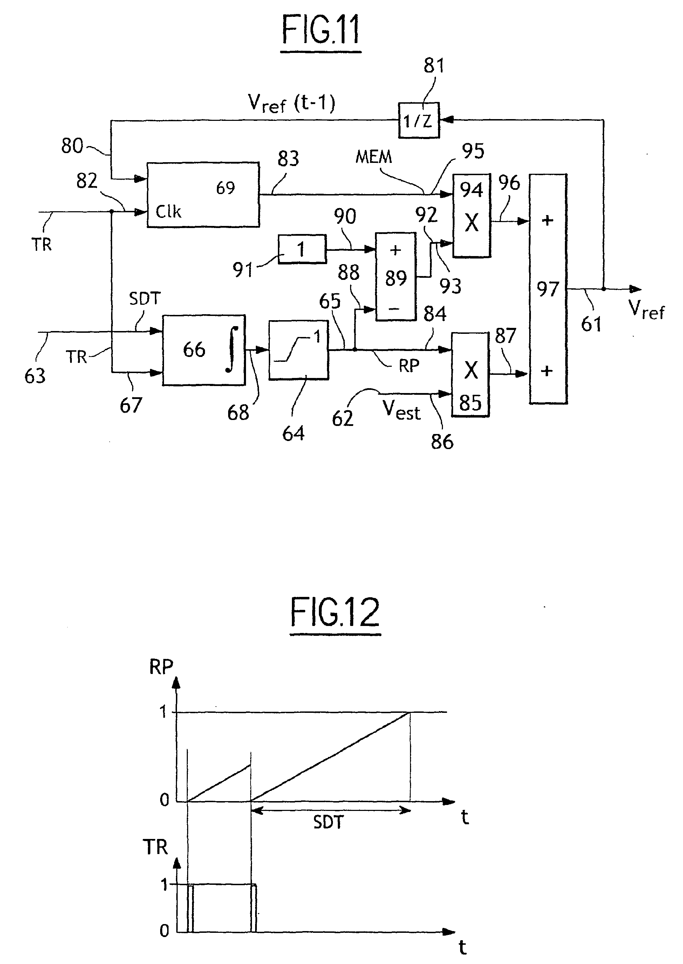

La figure 11 représente un mode de réalisation de ce module 60.

Un module 64 fournit sur sa sortie 65 un signal RP de rampe, saturé à 1 et remis à zéro chaque fois que le signal TR de transition passe à 1. A cet effet par exemple, un intégrateur 66 reçoit sur son entrée 67 de remise à zéro le signal TR de transition et sur son entrée 63 de grandeur à intégrer la durée SDT de transition pour commander sur sa sortie 68 le module 64. La figure 12 montre un chronogramme des signaux TR et RP en ordonnée, en fonction du temps t en abscisse. La durée pour que le signal RP passe de 0 à 1 selon une pente constante prescrite est prescrite à la durée constante SDT de transition en secondes.

Une bascule 69 mémorise la valeur Vref(t-1) de la vitesse de référence à l'instant précédent sur son entrée 80, issue d'un élément 81 de retard relié à la sortie 61. La vitesse Vref(t-1) est mémorisée au dernier instant où le signal TR de transition est égal à 1, par le fait que l'entrée 82 d'horloge de la bascule 69 est reliée au signal TR. La sortie 83 de la bascule 80 fournit le signal MEM(t).

Le signal Vref(t) sur la sortie 61 est alors obtenu en additionnant les deux signaux suivants :

- Vest(t).RP(t)
- MEM(t).[1-RP(t)]

Dans le mode de réalisation représenté à la figure 11, le signal RP est envoyé à la première entrée 84 d'un multiplicateur 85, tandis que la deuxième entrée 86 du multiplicateur 85 est reliée à l'entrée 62, le multiplicateur 85 fournissant sur sa sortie 87 Vest(t).RP(t).

Le signal RP est également envoyé à l'entrée négative 88 d'un soustracteur 89, dont l'entrée positive 90 est reliée à un module 91 de production d'un signal constant à un, le soustracteur 89 fournissant sur sa sortie 92 [1-RP(t)].

La sortie 92 est reliée à la première entrée 93 d'un multiplicateur 94, dont la deuxième entrée 95 est reliée à la sortie 83, le multiplicateur 94 fournissant sur sa sortie 96 MEM(t).[1-RP(t)].

Les sorties 87 et 96 sont reliées aux entrées d'un additionneur 97, fournissant sur la sortie 61 Vref = Vest(t).RP(t) + MEM(t).[1-RP(t)].

Si l'on appelle $t_{TR}$ l'instant où se produit une transition (TR=1), cela revient à passer progressivement de la valeur Vref($t_{TR}$) à la valeur Vest (t) en un temps SDT variable.

Il est prévu un module 98 de sortie, fournissant sur une sortie 99 la vitesse de référence Vref du véhicule, issue de la sortie 61, et sur une autre sortie 100 le signal FIAB de fiabilité.

**Revendications**

1. Procédé d'estimation d'une vitesse de déplacement longitudinal d'un véhicule automobile à l'aide d'au moins un calculateur embarqué sur le véhicule, comportant une étape de mesure, par au moins un capteur, de la vitesse (Wij) de rotation de chaque roue (ij) du véhicule,
   **caractérisé en ce qu'**il comporte en outre les étapes suivantes :

   - obtention pour chaque roue d'un indicateur (dij) de glissement de roue, apte à prendre un premier état (dij=1) de glissement de la roue et un deuxième état (dij=0) d'absence de glissement de la roue,
   - calcul de la vitesse (Vest) de déplacement longitudinal du véhicule, à partir des vitesses (Wij) de rotation de roues mesurées pour lesquelles l'indicateur (dij) de glissement de roue est dans le deuxième état (dij=0) d'absence de glissement de la roue, sans tenir compte des vitesses (Wij) de rotation de roues mesurées pour lesquelles l'indicateur (dij) de glissement de roue est dans le premier état (dij=1) de glissement.

2. Procédé suivant la revendication 1, **caractérisé en ce que**
   on obtient une valeur de couple (Cmi) du ou des moteur(s) sur les roues avant et /ou arrière,
   une pluralité de modes (MOD) de calcul de la vitesse (Vest) de déplacement longitudinal du véhicule est définie :

- un premier mode de calcul (MOD=2), lorsque, à la fois le couple sur les roues avant est inférieur à un premier seuil positif prescrit et supérieur à un deuxième seuil négatif prescrit, le couple sur les roues arrière est supérieur à un troisième seuil positif prescrit ou inférieur à un quatrième seuil négatif prescrit,
- un deuxième mode de calcul (MOD=3), lorsque à la fois le couple sur les roues arrière est inférieur à un cinquième seuil positif prescrit et supérieur à un sixième seuil négatif prescrit, le couple sur les roues avant est supérieur à un septième seuil positif prescrit ou inférieur à un huitième seuil négatif prescrit,
- un troisième mode de calcul (MOD=1), lorsque les conditions correspondant aux premier et deuxièmes modes de calcul ne sont pas remplies.

3.  Procédé suivant la revendication 2, **caractérisé en ce que**

- dans le premier mode de calcul (MOD=2), la vitesse (Vest) de déplacement longitudinal du véhicule est calculée :

    • à partir de la vitesse de rotation des roues avant, dont l'indicateur (dij) de glissement se trouvant dans le deuxième état (dij=0) d'absence de glissement, ou
    • si toutes les roues avant ont chacune leur indicateur de glissement se trouvant dans le premier état de glissement, à partir de la vitesse de rotation des roues arrière se trouvant dans le deuxième état (dij=0) d'absence de glissement,

- dans le deuxième mode de calcul (MOD=3), la vitesse (Vest) de déplacement longitudinal du véhicule est calculée :

    • à partir de la vitesse de rotation des roues arrière, dont l'indicateur (dij) de glissement se trouvant dans le deuxième état (dij=0) d'absence de glissement, ou
    • si toutes les roues arrière ont chacune leur indicateur de glissement se trouvant dans le premier état de glissement, à partir de la vitesse de rotation des roues avant se trouvant dans le deuxième état (dij=0) d'absence de glissement,

- dans le troisième mode de calcul (MOD=1), la vitesse (Vest) de déplacement longitudinal du véhicule est calculée à partir de la vitesse de rotation des roues arrière et des roues avant se trouvant dans le deuxième état (dij=0) d'absence de glissement.

4.  Procédé suivant la revendication 3, **caractérisé en ce que**
on obtient à partir d'au moins un organe d'actionnement de freinage par le conducteur un premier signal (SI) d'indication de freinage, apte à se trouver dans un premier état de freinage ou dans un deuxième état d'absence de freinage, et
pour remplir les conditions des premier et deuxième modes de calcul le premier signal (SI) d'indication de freinage du conducteur doit en plus se trouver dans le deuxième état d'absence de freinage.

5.  Procédé suivant l'une quelconque des revendications 2 à 4, **caractérisé en ce que**
on obtient à partir d'un système de régulation de freinage sur les roues avant et sur les roues arrière au moins un deuxième signal (SI2) d'indication de freinage sur les roues avant, apte à se trouver dans un premier état de freinage ou dans un deuxième état d'absence de freinage, et au moins un troisième signal (SI3) d'indication de freinage sur les roues arrière, apte à se trouver dans un premier état de freinage ou dans un deuxième état d'absence de freinage,

- pour remplir les conditions du premier mode (MOD=2) de calcul, à la fois le couple sur les roues avant est inférieur à un premier seuil positif prescrit et supérieur à un deuxième seuil négatif prescrit, le deuxième signal (SI2) d'indication de freinage sur les roues avant se trouve dans le deuxième état d'absence de freinage, le couple sur les roues arrière est supérieur à un troisième seuil positif prescrit ou inférieur à un quatrième seuil négatif prescrit, ou le troisième signal (SI3) d'indication de freinage sur les roues arrière se trouve dans le premier état de freinage,
- pour remplir les conditions du deuxième mode (MOD=3) de calcul, à la fois le couple sur les roues arrière est inférieur ou égal à un cinquième seuil positif prescrit et supérieur à un sixième seuil négatif prescrit, le troisième signal (SI3) d'indication de freinage sur les roues arrière se trouve dans le deuxième état d'absence de freinage, le couple sur les roues avant est supérieur à un septième seuil positif prescrit ou inférieur à un huitième seuil négatif prescrit, ou le deuxième signal (SI2) d'indication de freinage sur les roues avant se trouve dans le premier état de freinage.

**6.** Procédé suivant l'une quelconque des revendications 2 à 5, **caractérisé en ce que** les seuils sont fixés de manière proportionnelle à une répartition de poids prédéterminée du véhicule sur au moins un essieu avant supportant les roues avant et sur au moins un essieu arrière supportant les roues arrière.

**7.** Procédé suivant l'une quelconque des revendications 2 à 6, **caractérisé en ce que** on fait la moyenne arithmétique des vitesses de rotation de roue retenues dans les modes de calcul, multipliée par un rayon prescrit de roue, pour calculer la vitesse (Vest) de déplacement longitudinal du véhicule.

**8.** Procédé suivant l'une quelconque des revendications précédentes, **caractérisé en ce que**
la vitesse (Vest) de déplacement longitudinal du véhicule ayant été calculée, elle forme un premier signal (Vest) de vitesse estimée,
l'on détecte (TR) une discontinuité des valeurs du premier signal (Vest) de vitesse estimée,
on produit un deuxième signal (Vref) de vitesse longitudinale du véhicule à partir du premier signal (Vest) de vitesse estimée, en remplaçant la discontinuité détectée par un signal (RP) de transition continu prescrit.

**9.** Procédé suivant la revendication 8, **caractérisé en ce que**
on calcule le deuxième signal (Vref) de vitesse longitudinale du véhicule pour des instants successifs,
on calcule une valeur de ladite discontinuité des valeurs du premier signal (Vest) de vitesse estimée, cette valeur de la discontinuité étant égale à la différence entre la valeur (Vest) du premier signal de vitesse estimée pour l'instant présent et la valeur (Vref) du deuxième signal (Vref) de vitesse longitudinale pour l'instant précédent,
le signal (RP) de transition étant déterminé en fonction de la valeur de la discontinuité à partir d'une forme prescrite de signal.

**10.** Procédé suivant la revendication 9, **caractérisé en ce que** l'on calcule une durée (SDT) de transition du signal (RP) de transition, égale à la valeur de la discontinuité divisée par une pente (PT) prescrite.

**11.** Procédé suivant l'une quelconque des revendications 8 à 10, **caractérisé en ce que** le signal de transition est une rampe.

**12.** Procédé suivant l'une quelconque des revendications 8 à 11, **caractérisé en ce que** ladite discontinuité est détectée au moins par le fait que pour l'une des roues l'indicateur (dij) de glissement change d'état entre des instants successifs.

**13.** Procédé suivant l'une quelconque des revendications 8 à 12 en combinaison avec l'une des revendications 2 à 7, **caractérisé en ce que** ladite discontinuité est détectée au moins par le fait que le mode (MOD) de calcul change entre des instants successifs.

**14.** Dispositif pour la mise en oeuvre du procédé suivant l'une quelconque des revendications précédentes, destiné à être embarqué sur un véhicule automobile, **caractérisé en ce qu'**il comprend :

- au moins un capteur (1) de la vitesse (Wij) de rotation de chaque roue (ij) du véhicule,
- un moyen d'obtention pour chaque roue d'un indicateur (dij) de glissement de roue, apte à prendre un premier état (dij=1) de glissement de la roue et un deuxième état (dij=0) d'absence de glissement de la roue,
- un moyen (9) de calcul de la vitesse (Vest) de déplacement longitudinal du véhicule, à partir des vitesses (Wij) de rotation de roues mesurées pour lesquelles l'indicateur (dij) de glissement de roue est dans le deuxième état (dij=0) d'absence de glissement de la roue, sans tenir compte des vitesses (Wij) de rotation de roues mesurées pour lesquelles l'indicateur (dij) de glissement de roue est dans le premier état (dij=1) de glissement.

**Claims**

**1.** Method for estimating a speed of longitudinal displacement of a motor vehicle using at least one computer embedded in the vehicle, comprising a step for measuring, by at least one sensor, the rotation speed (Wij) of each wheel (ij) of the vehicle,
**characterized in that** it also comprises the following steps:

- obtaining, for each wheel, a wheel slip indicator (dij), capable of assuming a first state (dij = 1) of slip of the wheel and a second state (dij = 0) of absence of slip of the wheel,

- calculating the speed (Vest) of longitudinal displacement of the vehicle, based on the measured wheel rotation speeds (Wij) for which the wheel slip indicator (dij) is in the second state (dij = 0) of absence of slip of the wheel, without taking into account the measured wheel rotation speeds (Wij) for which the wheel slip indicator (dij) is in the first state (dij = 1) of slip.

2. Method according to Claim 1, **characterized in that** a value of torque (Cmi) of the engine or engines on the front and/or rear wheels is obtained,
a plurality of modes (MOD) for calculating the speed (Vest) of longitudinal displacement of the vehicle is defined:

- a first calculation mode (MOD = 2), when at the same time the torque on the front wheels is below a first prescribed positive threshold and above a second prescribed negative threshold, the torque on the rear wheels is above a third prescribed positive threshold or below a fourth prescribed negative threshold,
- a second calculation mode (MOD = 3), when at the same time the torque on the rear wheels is below a fifth prescribed positive threshold and above a sixth prescribed negative threshold, the torque on the front wheels is above a seventh prescribed positive threshold or below an eighth prescribed negative threshold,
- a third calculation mode (MOD = 1), when the conditions corresponding to the first and second calculation modes are not satisfied.

3. Method according to Claim 2, **characterized in that**

- in the first calculation mode (MOD = 2), the speed (Vest) of longitudinal displacement of the vehicle is calculated:

  • based on the speed of rotation of the front wheels, for which the slip indicator (dij) is in the second state (dij = 0) of absence of slip, or
  • if all the front wheels each have their slip indicator in the first state of slip, based on the speed of rotation of the rear wheels being in the second state (dij = 0) of absence of slip,

- in the second calculation mode (MOD = 3), the speed (Vest) of longitudinal displacement of the vehicle is calculated:

  • based on the speed of rotation of the rear wheels, for which the slip indicator (dij) is in the second state (dij = 0) of absence of slip, or
  • if all the rear wheels each have their slip indicator in the first state of slip, based on the speed of rotation of the front wheels being in the second state (dij = 0) of absence of slip,

- in the third calculation mode (MOD = 1), the speed (Vest) of longitudinal displacement of the vehicle is calculated based on the speed of rotation of the rear wheels and of the front wheels being in the second state (dij = 0) of absence of slip.

4. Method according to Claim 3, **characterized in that** from at least one driver-operated braking actuation member, a first braking indication signal (SI) is obtained, said signal being able to be in a first state of braking or in a second state of absence of braking, and
to satisfy the conditions of the first and second calculation modes, the first driver-operated braking indication signal (SI) must also be in the second state of absence of braking.

5. Method according to any one of Claims 2 to 4, **characterized in that**
at least one second front wheel braking indication signal (SI2), which is able to be in a first state of braking or in a second state of absence of braking, and at least one third rear wheel braking indication signal (SI3), which is able to be in a first state of braking or in a second state of absence of braking, are obtained from a braking regulation system on the front wheels and on the rear wheels,

- to satisfy the conditions of the first calculation mode (MOD = 2), at the same time the torque on the front wheels is below a first prescribed positive threshold and above a second prescribed negative threshold, the second front wheel braking indication signal (SI2) is in the second state of absence of braking, the torque on the rear wheels is above a third prescribed positive threshold or below a fourth prescribed negative threshold, or the third rear wheel braking indication signal (SI3) is in the first state of braking,
- to satisfy the conditions of the second calculation mode (MOD = 3), at the same time the torque on the rear wheels is below or equal to a fifth prescribed positive threshold and above a sixth prescribed negative threshold, the third rear wheel braking indication signal (SI3) is in the second state of absence of braking, the torque on the front wheels is above a seventh prescribed positive threshold or below an eighth prescribed negative threshold, or the second front wheel braking indication signal (SI2) is in the first state of braking.

6. Method according to any one of Claims 2 to 5, **characterized in that** the thresholds are set so as to be proportional to a predetermined weight distribution of the vehicle on at least one front axle supporting the front wheels and on at least one rear axle supporting the rear wheels.

7. Method according to any one of Claims 2 to 6, **characterized in that** the arithmetic mean of the wheel rotation speeds retained in the calculation modes is obtained and multiplied by a prescribed wheel radius, to calculate the speed (Vest) of longitudinal displacement of the vehicle.

8. Method according to any one of the preceding claims, **characterized in that**
the speed (Vest) of longitudinal displacement of the vehicle having been calculated, it forms a first estimated speed signal (Vest),
a discontinuity in the values of the first estimated speed signal (Vest) is detected (TR),
a second vehicle longitudinal speed signal (Vref) is produced from the first estimated speed signal (Vest), by replacing the detected discontinuity with a prescribed continuous transition signal (RP).

9. Method according to Claim 8, **characterized in that** the second vehicle longitudinal speed signal (Vref) is calculated for successive instants,
a value of said discontinuity in the values of the first estimated speed signal (Vest) is calculated, this discontinuity value being equal to the difference between the value (Vest) of the first estimated speed signal for the present instant and the value (Vref) of the second longitudinal speed signal (Vref) for the preceding instant,
the transition signal (RP) being determined according to the value of the discontinuity based on a prescribed signal form.

10. Method according to Claim 9, **characterized in that** a duration (SDT) of transition of the transition signal (RP) is calculated, said duration being equal to the value of the discontinuity divided by a prescribed slope (PT).

11. Method according to any one of Claims 8 to 10, **characterized in that** the transition signal is a ramp.

12. Method according to any one of Claims 8 to 11, **characterized in that** said discontinuity is detected at least by the fact that, for one of the wheels, the slip indicator (dij) changes state between successive instants.

13. Method according to any one of Claims 8 to 12 in combination with one of Claims 2 to 7, **characterized in that** said discontinuity is detected at least by the fact that the calculation mode (MOD) changes between successive instants.

14. Device for implementing the method according to any one of the preceding claims, intended to be embedded on a motor vehicle, **characterized in that** it comprises:

   - at least one sensor (1) sensing the speed (Wij) of rotation of each wheel (ij) of the vehicle,
   - a means for obtaining, for each wheel, a wheel slip indicator (dij), which can assume a first state (dij = 1) of slip of the wheel and a second state (dij = 0) of absence of slip of the wheel,
   - a means (9) for calculating the speed (Vest) of longitudinal displacement of the vehicle, based on the measured wheel rotation speeds (Wij) for which the wheel slip indicator (dij) is in the second state (dij = 0) of absence of slip of the wheel, without taking into account the measured wheel rotation speeds (Wij) for which the wheel slip indicator (dij) is in the first state (dij = 1) of slip.

**Patentansprüche**

1. Verfahren zum Schätzen einer Längsfahrgeschwindigkeit eines Kraftfahrzeugs mit Hilfe mindestens eines an Bord des Fahrzeugs befindlichen Rechners, das einen Schritt des Messens, durch mindestens einen Sensor, der Drehgeschwindigkeit (Wij) jedes Rads (ij) des Fahrzeugs aufweist,
**dadurch gekennzeichnet, dass** es außerdem die folgenden Schritte aufweist:

   - Erhalt, für jedes Rad, eines Radschlupfanzeigers (dij), der einen ersten Zustand (dij=1) eines Schlupfs des Rads und einen zweiten Zustand (dij=0) der Abwesenheit eines Schlupfs des Rads annehmen kann,
- Berechnen der Längsfahrgeschwindigkeit (Vest) des Fahrzeugs ausgehend von den gemessenen Drehgeschwindigkeiten (Wij) von Rädern, für die der Radschlupfanzeiger (dij) im zweiten Zustand (dij=0) der Abwesenheit eines Schlupfs des Rads ist, ohne Berücksichtigung der gemessenen Drehgeschwindigkeiten (Wij) von Rädern, für die der Radschlupfanzeiger (dij) im ersten Zustand (dij=1) eines Schlupfes ist.

2. Verfahren nach Anspruch 1, **dadurch gekennzeichnet, dass**
ein Drehmomentwert (Cmi) des oder der Motoren an den Vorder- und/oder Hinterrädern erhalten wird, mehrere Berechnungsarten (MOD) der Längsfahrgeschwindigkeit (Vest) des Fahrzeugs definiert werden:

- eine erste Berechnungsart (MOD=2), wenn das Drehmoment an den Vorderrädern gleichzeitig niedriger als eine erste vorgeschriebene positive Schwelle und höher als eine zweite vorgeschriebene negative Schwelle ist, das Drehmoment an den Hinterrädern höher als eine dritte vorgeschriebene positive Schwelle oder niedriger als eine vierte vorgeschriebene negative Schwelle ist,
- eine zweite Berechnungsart (MOD=3), wenn das Drehmoment an den Hinterrädern gleichzeitig niedriger als eine fünfte vorgeschriebene positive Schwelle und höher als eine sechste vorgeschriebene negative Schwelle, das Drehmoment an den Vorderrädern höher als eine siebte vorgeschriebene positive Schwelle oder niedriger als eine achte vorgeschriebene negative Schwelle ist,
- eine dritte Berechnungsart (MOD=1), wenn die den ersten und zweiten Berechnungsarten entsprechenden Bedingungen nicht erfüllt sind.

3. Verfahren nach Anspruch 2, **dadurch gekennzeichnet, dass**

- in der ersten Berechnungsart (MOD=2) die Längsfahrgeschwindigkeit (Vest) des Fahrzeugs berechnet wird:

• ausgehend von der Drehgeschwindigkeit der Vorderräder, deren Schlupfanzeiger (dij) sich im zweiten Zustand (dij=0) eines nicht vorhandenen Schlupfs befindet, oder
• wenn alle Vorderräder je ihren Schlupfanzeiger im ersten Zustand eines Schlupfs haben, ausgehend von der Drehgeschwindigkeit der Hinterräder, die sich im zweiten Zustand (dij=0) eines nicht vorhandenen Schlupfs befinden,

- in der zweiten Berechnungsart (MOD=3) die Längsfahrgeschwindigkeit (Vest) des Fahrzeugs berechnet wird:

• ausgehend von der Drehgeschwindigkeit der Hinterräder, deren Schlupfanzeiger (dij) sich im zweiten Zustand (dij=0) eines nicht vorhandenen Schlupfs befindet, oder
• wenn alle Hinterräder je ihren Schlupfanzeiger im ersten Zustand eines Schlupfs haben, ausgehend von der Drehgeschwindigkeit der Vorderräder, die sich im zweiten Zustand (dij=0) eines nicht vorhandenen Schlupfs befinden,

- in der dritten Berechnungsart (MOD=1) die Längsfahrgeschwindigkeit (Vest) des Fahrzeugs ausgehend von der Drehgeschwindigkeit der Hinterräder und der Vorderräder berechnet wird, die sich im zweiten Zustand (dij=0) eines nicht vorhandenen Schlupfs befinden.

4. Verfahren nach Anspruch 3, **dadurch gekennzeichnet, dass**
ausgehend von mindestens einem Organ der Bremsbetätigung durch den Fahrer ein erstes Bremsanzeigesignal (SI) erhalten wird, das sich in einem ersten Zustand des Bremsens oder in einem zweiten Zustand des nicht vorhandenen Bremsens befinden kann, und
um die Bedingungen der ersten und zweiten Berechnungsarten zu erfüllen, das erste Bremsanzeigesignal (SI) des Fahrers sich außerdem im zweiten Zustand des nicht vorhandenen Bremsens befinden muss.

5. Verfahren nach einem der Ansprüche 2 bis 4, **dadurch gekennzeichnet, dass**
ausgehend von einem Bremsregelungssystem an den Vorderrädern und den Hinterrädern mindestens ein zweites Bremsanzeigesignal (SI2) an den Vorderrädern, das sich in einem ersten Zustand des Bremsens oder in einem zweiten Zustand des nicht vorhandenen Bremsens befinden kann, und mindestens ein drittes Bremsanzeigesignal (SI3) an den Hinterrädern erhalten wird, das sich in einem ersten zustand des Bremsens oder in einem zweiten Zustand des nicht vorhandenen Bremsens befinden kann,

- um die Bedingungen der ersten Berechnungsart (MOD=2) zu erfüllen, gleichzeitig das Drehmoment an den Vorderrädern niedriger als eine erste vorgeschriebene positive Schwelle und höher als eine zweite vorgeschriebene negative Schwelle ist, das zweite Bremsanzeigesignal (SI2) an den Vorderrädern sich im zweiten Zustand des nicht vorhandenen Bremsens befindet, das Drehmoment an den Hinterrädern höher als eine dritte vorgeschriebene positive Schwelle oder niedriger als eine vierte vorgeschriebene negative Schwelle ist, oder das dritte Bremsanzeigesignal (SI3) an den Hinterrädern sich im ersten Zustand des Bremsens befindet,
- um die Bedingungen der zweiten Berechnungsart (MOD=3) zu erfüllen, gleichzeitig das Drehmoment an den Hinterrädern niedriger als eine oder gleich einer fünften vorgeschriebenen positiven Schwelle und höher als eine sechste vorgeschriebene negative Schwelle ist, das dritte Bremsanzeigesignal (SI3) an den Hinterrädern sich im zweiten Zustand des nicht vorhandenen Bremsens befindet, das Drehmoment an den Vorderrädern höher als eine siebte vorgeschriebene positive Schwelle oder niedriger als eine achte vorgeschriebene negative Schwelle ist, oder das zweite Bremsanzeigesignal (SI2) an den Vorderrädern sich im ersten Zustand des Bremsens befindet.

6. Verfahren nach einem der Ansprüche 2 bis 5, **dadurch gekennzeichnet, dass** die Schwellen proportional zu einer vorbestimmten Gewichtsverteilung des Fahrzeugs an mindestens einer Vorderachse, die die Vorderräder trägt, und an mindestens einer Hinterachse festgelegt werden, die die Hinterräder trägt.

7. Verfahren nach einem der Ansprüche 2 bis 6, **dadurch gekennzeichnet, dass** das arithmetische Mittel der Raddrehgeschwindigkeiten berechnet wird, die in den Betriebsarten gewählt werden, multipliziert mit einem vorgeschriebenen Radradius, um die Längsfahrgeschwindigkeit (Vest) des Fahrzeugs zu berechnen.

8. Verfahren nach einem der vorhergehenden Ansprüche, **dadurch gekennzeichnet, dass**
wenn die Längsfahrgeschwindigkeit (Vest) des Fahrzeugs berechnet ist, sie ein erstes Signal (Vest) geschätzter Geschwindigkeit bildet,
eine Diskontinuität der Werte des ersten Signals (Vest) geschätzter Geschwindigkeit erfasst wird (TR),
ein zweites Signal (Vref) der Längsgeschwindigkeit des Fahrzeugs ausgehend vom ersten Signal (Vest) geschätzter Geschwindigkeit erzeugt wird, indem die erfasste Diskontinuität durch ein vorgeschriebenes kontinuierliches Übergangssignal (RP) ersetzt wird.

9. Verfahren nach Anspruch 8, **dadurch gekennzeichnet, dass**
das zweite Signal (Vref) der Längsgeschwindigkeit des Fahrzeugs für aufeinanderfolgende Zeitpunkte berechnet wird,
ein Wert der Diskontinuität der Werte des ersten Signals (Vest) geschätzter Geschwindigkeit berechnet wird, wobei dieser Wert der Diskontinuität gleich der Differenz zwischen dem Wert (Vest) des ersten Signals geschätzter Geschwindigkeit für den aktuellen Zeitpunkt und dem Wert (Vref) des zweiten Signals (Vref) der Längsgeschwindigkeit für den vorhergehenden Zeitpunkt ist,
wobei das Übergangssignal (RP) abhängig vom Wert der Diskontinuität ausgehend von einer vorgeschriebenen Signalform bestimmt wird.

10. Verfahren nach Anspruch 9, **dadurch gekennzeichnet, dass** eine Übergangsdauer (SDT) des Übergangssignals (RP) gleich dem Wert der Diskontinuität dividiert durch eine vorgeschriebene Steigung (PT) berechnet wird.

11. Verfahren nach einem der Ansprüche 8 bis 10, **dadurch gekennzeichnet, dass** das Übergangssignal eine Rampe ist.

12. Verfahren nach einem der Ansprüche 8 bis 11, **dadurch gekennzeichnet, dass** die Diskontinuität mindestens durch die Tatsache erfasst wird, dass für eines der Räder der Schlupfanzeiger (dij) seinen Zustand zwischen aufeinanderfolgenden Zeitpunkten ändert.

13. Verfahren nach einem der Ansprüche 8 bis 12 in Kombination mit einem der Ansprüche 2 bis 7, **dadurch gekennzeichnet, dass** die Diskontinuität mindestens durch die Tatsache erfasst wird, dass die Berechnungsart (MOD) sich zwischen aufeinanderfolgenden Zeitpunkten ändert.

14. Vorrichtung zur Durchführung des Verfahrens nach einem der vorhergehenden Ansprüche, die dazu bestimmt ist, in ein Kraftfahrzeug eingebaut zu werden, **dadurch gekennzeichnet, dass** sie enthält:

- mindestens einen Sensor (1) für die Drehgeschwindigkeit (Wij) jedes Rads (ij) des Fahrzeugs,
- eine Einrichtung für den Erhalt, für jedes Rad, eines Radschlupfanzeigers (dij), der einen ersten Zustand (dij=1) eines Schlupfs des Rads und einen zweiten Zustand (dij=0) eines nicht vorhandenen Schlupfs des Rads annehmen kann,
- eine Einrichtung (9) zur Berechnung der Längsfahrgeschwindigkeit (Vest) des Fahrzeugs ausgehend von den gemessenen Drehgeschwindigkeiten (Wij) der Räder, für die der Radschlupfanzeiger (dij) im zweiten Zustand (dij=0) eines nicht vorhandenen Schlupfs des Rads ist, ohne Berücksichtigung der gemessenen Drehgeschwindigkeiten (Wij) von Rädern, für die der Radschlupfanzeiger (dij) im ersten Zustand (dij=1) eines Schlupfs ist.

FIG.1

## FIG.2

## FIG.4

## FIG.5

# FIG.3

71

$\omega_{ij}$

$C_{mi}$

$T_{fij}$

$CL_f$

$CL_r$

72

74

75

73

$*$

76

$S_{ij}=dS_{xij}$

77

7

FIG.6

FIG.7

FIG.8

## FIG.9

## FIG.10

# FIG.11

# FIG.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5579230 A

- US 2006282207 A

**Littérature non-brevet citée dans la description**

- **PUSCA R et al.** Fuzzy logic based control for electric vehicle with four separate traction drives. *VTC SPRING 2002. IEEE 55TH. VEHICULAR TECH-NOLOGY CONFERENCE. PROCEEDINGS. BIR-MINGHAM, AL, MAY 6 - 9, 2002, IEEE VEHICULAR TECHNOLGY CONFERENCE,* 06 Mai 2002, vol. 1, ISBN 0-7803-7484-3, 2089-2096